# EUROPÄISCHE PATENTSCHRIFT

(11) **EP 3 260 227 B1**
(45) Veröffentlichungstag und Bekanntmachung des Hinweises auf die Patenterteilung: **04.08.2021**
(21) Anmeldenummer: 17174794.2
(22) Anmeldetag: 07.06.2017
(51) Int. Cl.: B23D 47/00, B23D 59/02, B23D 61/02

(54) **SÄGEBLATT FÜR EINE KREISSÄGE, VERFAHREN ZUM HERSTELLEN EINES SÄGEBLATTS UND KREISSÄGEMASCHINE**
SAW BLADE FOR A CIRCULAR SAW, METHOD FOR PRODUCING A SAW BLADE AND CIRCULAR SAW MACHINE
LAME DE SCIE POUR UNE SCIE CIRCULAIRE, PROCÉDÉ DE FABRICATION D'UNE LAME DE SCIE ET SCIE CIRCULAIRE

(30) Priorität: 23.06.2016 DE 102016111543
(43) Veröffentlichungstag der Anmeldung: 27.12.2017
(73) Patentinhaber: KEURO Besitz GmbH & Co. EDV-Dienstleistungs KG, 77855 Achern (DE)
(72) Erfinder: Krebber, Sönke Florian, 76530 Baden-Baden (DE); Stolzer, Armin, 76530 Baden-Baden (DE)
(74) Vertreter: Lemcke, Brommer & Partner Patentanwälte Partnerschaft mbB

(56) Entgegenhaltungen:
- EP-A1- 0 239 676
- CN-A- 104 191 467
- CN-U- 204 019 643
- CN-U- 204 148 645
- US-A- 927 164
- US-A1- 2016 008 897

## Beschreibung

Die vorliegende Erfindung betrifft ein Sägeblatt für eine Kreissäge nach dem Oberbegriff des Anspruchs 1, eine Kreissägemaschine mit einem solchen Sägeblatt und ein Verfahren zum Herstellen eines solchen Sägeblatts.

Ein Sägeblatt der vorliegenden Art umfasst ein ein- oder mehrteiliges, kreisscheibenförmiges Stammblatt, an dessen Außenumfang eine Vielzahl umfangsverteilter Sägezähne angeordnet ist. Im Zentrum des Stammblatts sind Mittel zum Befestigen des Sägeblatts an einer Antriebswelle vorgesehen, die im einfachsten Fall aus einer Öffnung zum Durchstecken einer Antriebswelle und einer Mitnehmerkerbe bestehen. Die Sägezähne können einteilig an das Stammblatt angeformt sein, was insbesondere bedeutet, dass das Stammblatt zusammen mit den umfangsverteilten Sägezähnen aus einem einzigen Werkstück geformt wurde. Je nach Anwendungsgebiet können die Sägezähne jedoch auch separat gefertigt und an das Stammblatt angesetzt sein, oder die Sägezähne sind mit Hartmetall- oder Keramikschneiden versehen und dergleichen mehr. Das Stammblatt selbst ist üblicherweise aus Metall gefertigt, jedoch sind im Rahmen der vorliegenden Erfindung auch andere Materialien, wie insbesondere keramische Materialien denkbar.

Solche Sägeblätter werden in unterschiedlichen Konfigurationen verwendet, beispielsweise in maschinellen Handwerkzeugen, in einfachen Standkreissägen für die Baustelle oder Werkstatt zum Sägen von Holz, Steinplatten und dergleichen, sowie in industriellem Maßstab im Rahmen einer Kreissägemaschine. Eine solche weist eine feststehende oder bewegliche Auflage für mindestens ein zu sägendes Werkstück auf, die in der Regel als Sägetisch ausgebildet ist, sowie eine feststehende oder bewegliche Haltevorrichtung für das Sägeblatt und eine Antriebsvorrichtung mit einer Antriebswelle, an der das Sägeblatt lösbar befestigt ist.

Insbesondere im industriellen Einsatz im Rahmen einer Kreissägemaschine, und dort wiederum insbesondere beim Sägen von metallischen Werkstoffen, ist es unverzichtbar, die Sägezähne beim Eindringen in das zu sägende Werkstück bzw. im Schnittkanal mit einer schmierenden Flüssigkeit zu benetzen. Bei hohen Schnittgeschwindigkeiten ist es darüber hinaus notwendig, eine Flüssigkeitsmenge pro Zeiteinheit an die Sägezähne heranzubringen, die in der Lage ist, einen kühlenden Effekt zu erzeugen.

Herkömmlicherweise enthalten Kreissägemaschinen daher Einrichtungen zum Aufbringen einer Kühl-Schmier-Emulsion auf den Außenumfang des Sägeblatts, um mittels einer Düse oder eines einfachen Auslaufs die Kühl-Schmier-Emulsion auf den Außenumfang und die Sägezähne des Sägeblatts aufzusprühen, aufzuträufeln oder in einem Strahl aufzubringen, und zwar möglichst kurz bevor die Sägezähne mit dem zu sägenden Material in Kontakt kommen.

Es liegt auf der Hand, dass dieses herkömmliche Aufbringen von Kühl-Schmier-Emulsion auf das Sägeblatt nicht so zielgerichtet erfolgen kann, wie dies wünschenswert wäre. Außerdem ist es bei Kreissägen naturgemäß schwierig, diejenige Stelle am Außenumfang des Sägeblatts mit Kühl- Schmier-Emulsion zu versehen, die möglichst nahe an der Eintrittsstelle der Sägezähne in das zu sägende Material liegt. Denn diese Stelle verändert sich entsprechend dem Sägefortschritt.

Um diese Problematik besser als in der genannten herkömmlichen Art und Weise zu lösen, ist in der DE 37 08 360 A1 vorgeschlagen worden, ein Sägeblatt für eine Kreissäge mehrteilig zu fertigen, indem das Stammblatt aus zwei zueinander parallelen, mittels Distanzmitteln voneinander beabstandeten Scheiben zusammengesetzt wird, wobei zwischen den Distanzmitteln und somit im Inneren des Stammblatts Kanäle verbleiben, in denen ein flüssiges Kühlmedium bis an den Außenumfang des Sägeblatts fließen kann. Das flüssige Kühlmedium kann somit in einem zentralen Bereich des Sägeblatts in dieses gezielt eingeleitet werden, von wo es dann durch die im Inneren des Sägeblatts verlaufenden Kanäle an den Außenumfang des Sägeblatts und damit an die Sägezähne herangebracht wird.

Eine ähnliche Lösung ist aus der DE 10 2007 022 310 A1 bekannt. Auch dort wird ein Sägeblatt für eine Kreissäge mehrteilig mit innenliegenden Kanälen gefertigt, in denen ein flüssiges Kühlmedium von einem zentralen Bereich des Sägeblatts bis zu dessen Außenumfang fließen kann.

Diese bekannten, mehrteilig aufgebauten und mit innenliegenden Kanälen versehenen Sägeblätter sind allerdings nicht nur aufwendig in ihrer Herstellung, sondern es steht auch zu befürchten, dass ihre Eigenstabilität und das Schwingungsverhalten durch die Kanäle und den mehrteiligen Aufbau negativ beeinflusst werden. Besonders problematisch ist jedoch die durch die innenliegenden Kanäle verursachte Dicke bzw. Blattstärke des Stammblatts. Denn naturgemäß muss der Schnittkanal im zu sägenden Werkstück eine Breite aufweisen, die es erlaubt, dass das Stammblatt des Sägeblatts hineinpasst. Je breiter der Schnittkanal ist, desto mehr Material wird jedoch beim Sägen zerspant, was die Kosten erhöht und dementsprechend zu vermeiden ist.

In der CN 204148645 U ist ein Hartlegierungs-Kreissägeblatt offenbart, das aus zwei Teilen zusammengesetzt ist. Beide Seitenflächen des Stammblatts dieses Kreissägeblatts sind mit offenen Kanälen zum Leiten von Wasser versehen, die bis zum Außenumfang des Stammblatts verlaufen. In der CN-A-104191467 und in der CN-U-204019643 sind Sägeblätter für eine Kreissäge offenbart, mit einem jeweils einteiligen Stammblatt mit Sägezähnen, wobei jeweils eine Seitenfläche des Stammblatts mit offenen Kanälen zum Leiten von Wasser versehen ist.

Der vorliegenden Erfindung liegt daher die Aufgabe zugrunde, ein Sägeblatt der eingangs genannten Art sowie eine Kreissägemaschine mit einem solchen Sägeblatt und ein Verfahren zum Herstellen eines solchen Sägeblatts vorzuschlagen, mit dem bzw. mit der eine effiziente Versorgung der Sägezähne mit einer Flüssigkeit, insbesondere einer Kühl-Schmier-Emulsion, unter Beibehaltung der Stabilität und Materialstärke eines herkömmlichen Sägeblatts erzielt werden kann.

Gelöst ist diese Aufgabe durch ein Sägeblatt mit den Merkmalen des Anspruchs 1, durch eine Kreissägemaschine mit den Merkmalen des Anspruchs 11 sowie durch ein Verfahren mit den Merkmalen des Anspruchs 10. Bevorzugte Ausgestaltungen des erfindungsgemäßen Sägeblatts finden sich in den Ansprüchen 2 bis 9, vorteilhafte Ausgestaltungen der erfindungsgemäßen Kreissägemaschine sind in den Ansprüchen 12 bis 14 niedergelegt.

Ein erfindungsgemäßes Sägeblatt für eine Kreissäge, das ein ein- oder mehrteiliges kreisscheibenförmiges Stammblatt aufweist, an dessen Außenumfang eine Vielzahl von umfangsverteilten Sägezähnen angeordnet ist und in dessen Zentrum Mittel zum Befestigen des Sägeblatts an einer Antriebswelle vorgesehen sind, weist weiter das Merkmal auf, dass mindestens eine Seitenfläche des Stammblatts mit offenen Kanälen zum Leiten von Flüssigkeiten versehen ist, wobei diese Kanäle insbesondere durch Gravieren, beispielsweise durch Lasergravieren in die entsprechende Seitenfläche des Stammblatts eingebracht sind.

Die offenen Kanäle, die beispielsweise als Nuten, als Rinnen oder Vertiefungen im Sinne von Leitlinien ausgebildet sowie gegebenenfalls mit variierender Tiefe und/oder Struktur versehen sein können, leiten eine Flüssigkeit, also in der Regel eine Kühl-Schmier-Emulsion von einem Bereich des Stammblatts, der vom Außenumfang beabstandet ist, zum Außenumfang und somit zu den Sägezähnen hin, indem die Zentrifugalkraft aus der Rotationsbewegung des Sägeblatts genutzt wird. Bei zunehmenden Sägefortschritt, also in der Regel dann, wenn besonderes viele Sägezähne im Eingriff mit dem zu sägenden Material stehen, sorgt das zu sägende Werkstück im Schnittkanal für eine Abdichtung der offenen Kanäle, da es diese wie einen Deckel schließt. Außerhalb des zu sägenden Materials sorgt eine in der Regel vorhanden Adhäsionswirkung zwischen der Flüssigkeit und dem Stammblatt dafür, dass die Flüssigkeit zumindest zu einem großen Teil entlang der offenen Kanäle geleitet wird. Wenn das Stammblatt so geformt ist, dass seine zentralen Bereiche eine kleinere Materialstärke als seine Randbereiche aufweisen, ergibt sich bei der Rotationsbewegung des Sägeblatts sogar eine Komponente der Zentrifugalkraft, die die Flüssigkeit in den offenen Kanälen hält.

Die aufgrund der Rotation des Sägeblatts wirkende Zentrifugalkraft beschleunigt die in den erfindungsgemäßen Kanälen geleitete Flüssigkeit zum Außenumfang des Stammblatts hin, so dass dann, wenn die Kanäle zwischen den Sägezähnen, d.h. in den Spanräumen des Sägeblatts enden, die Flüssigkeit in der Lage ist, die Späne aus den Spanräumen auszuspülen. Gegebenenfalls kann man hierdurch auf mechanische Späneräumbürsten verzichten; in jedem Fall wird jedoch die Gefahr weiter verringert, Späne, die am Außenumfang des Sägeblatts gegebenenfalls anhaften, beim Wiedereintritt in das zu sägende Werkstück mit in den Schnittkanal hineinzuziehen.

Die vorhandenen, offenen Kanäle auf einer oder auf beiden Seitenflächen des Stammblatts ermöglichen somit, eine Flüssigkeit, insbesondere eine Kühl-Schmier-Emulsion an den Bereich der Sägezähne heranzubringen, ohne das Sägeblatt konstruktiv aufwendiger fertigen zu müssen und ohne die Breite des Sägeblatts und somit die Breite des entstehenden Schnittkanals zu vergrößern.

Die offenen Kanäle können nach dem Vorbild von Reifenprofilen bei Fahrzeugen ausgebildet und auf die Viskosität und Adhäsionseigenschaften der verwendeten Flüssigkeit sowie auf die Geometrie und die Rotationsgeschwindigkeit des Sägeblatts abgestimmt sein. Insbesondere können sie einen bogenförmigen Verlauf aufweisen, um eine darin geleitete Flüssigkeit aufgrund einer Rotation des Sägeblatts und einer dadurch hervorgerufenen Zentrifugalkraft zum Außenumfang des Stammblatts hin zu beschleunigen.

Um die gezielte Leitung der verwendeten Flüssigkeit in den offenen Kanälen weiter zu bündeln, ist es gemäß der vorliegenden Erfindung vorgesehen, die Oberfläche derjenigen Seitenfläche des Stammblatts, die mit Kanälen versehen ist, oder gegebenenfalls beide Seitenflächen des Stammblatts mit einer flüssigkeitsabweisenden Beschichtung zu versehen. Besonders effizient kann dies mit dem erfindungsgemäßen Verfahren erfolgen, gemäß welchem mindestens eine Seitenfläche des Stammblatts mit einer flüssigkeitsabweisenden Beschichtung versehen und danach die offenen Kanäle zum Leiten von Flüssigkeiten eingraviert werden, wobei dies zweckmäßiger weise mittels Lasergravur geschieht. Durch das Gravieren wird die flüssigkeitsabweisende Beschichtung durchbrochen, so dass die entstehenden offenen Kanäle dann gerade nicht mit einer flüssigkeitsabweichenden Beschichtung versehen sind.

Wenn die Mittel zum Befestigen des Sägeblatts an einer Antriebswelle mindestens einen auf das Stammblatt aufgesetzten Flansch umfassen, ist es im Rahmen der vorliegenden Erfindung bevorzugt, wenn zumindest ein Teil der offenen Kanäle bereichsweise unter dem Flansch verlaufen, die Kanäle also bis unter den Flansch reichen. Es kann dann vorzugsweise zwischen dem Flansch und der Seitenfläche des Stammblatts ein Flüssigkeitsraum gebildet sein, in den zumindest ein Teil der Kanäle hineinreicht und von dem aus die Flüssigkeit durch die Kanäle bis im Wesentlichen zum Außenumfang des Stammblatts hin geleitet wird.

Die Zuführung der Flüssigkeit in den Flüssigkeitsraum kann dann über eine Flüssigkeitszuführung am Flansch erfolgen, oder auch von der Antriebswelle aus; letzteres dann, wenn die Antriebswelle mit einer Flüssigkeitsdurchführung versehen ist, die von einem Anschluss bis zu dem zwischen dem Flansch und einer Seitenfläche des Stammblatts gebildeten Flüssigkeitsraum verläuft.

Eine Zuführung der Flüssigkeit durch die Antriebswelle einer erfindungsgemäßen Kreissägemaschine kann auch ohne Flansch vorteilhaft sein, da eine Antriebswelle mit einer Flüssigkeitsdurchführung besonders dazu geeignet ist, die Flüssigkeit von einem Anschluss bis zu demjenigen Bereich zu leiten, in dem das Sägeblatt auf der Antriebswelle zu befestigen ist. Da dies regelmäßig der zentrale Bereich des Sägeblatts ist, kann die Flüssigkeit dann von dort aus über die erfindungsgemäßen offenen Kanäle aufgrund der Rotationsbewegung des Sägeblatts bis an dessen Außenbereiche und insbesondere an oder zwischen die Sägezähne geleitet werden.

In vielen Fällen wird ein erfindungsgemäßes Sägeblatt mit einer Führungseinrichtung versehen sein, die mindestens eine Halterung und Gleitstücke für einen zumindest zeitweisen gleitenden Kontakt mit dem Stammblatt umfasst. Wenn für einen solchen Fall das Sägeblatt solcherart mit offenen Kanälen versehen ist, die teilweise in einem von dieser Führungseinrichtung überstrichenen Bereich verlaufen und insbesondere von diesem Bereich des Stammblatts ausgehend bis im Wesentlichen zum Außenumfang des Stammblatts hin verlaufen, kann die Zuführung der Flüssigkeit auch über diese Führungseinrichtung erfolgen, wozu die Halterung der Führungseinrichtung dann mit einem Flüssigkeitsanschluss versehen ist. Eine Zuführung der Flüssigkeit über die Antriebswelle oder über einen sich mit dem Sägeblatt mitdrehenden Flansch erübrigt sich dann. Als Nebeneffekt werden vorteilhafterweise auch die Gleitstücke mit der Flüssigkeit, also insbesondere einer Kühl-Schmier-Emulsion versorgt. Da solche Führungseinrichtungen möglichst nahe am Außenumfang des Sägeblatts angeordnet sind, ist der Weg, den die Flüssigkeit in den erfindungsgemäßen offenen Kanälen bis zu den Sägezähnen hin zurücklegen muss, besonders kurz, und der Bereich, in dem die Kanäle im Schnittkanal vom gesägten Material abgedeckt werden, ist besonders groß.

Mehrere Ausführungsbeispiele für ein erfindungsgemäß ausgestaltetes Sägeblatt sind im Folgenden anhand der beigefügten Zeichnungen näher beschrieben und erläutert. Es zeigen:
- Figur 1: eine perspektivische Darstellung eines erfindungsgemäß ausgestalteten Sägeblatts, mit einer Detailvergrößerung;
- Figur 2: eine Draufsicht auf eine weitere Ausführungsform eines erfindungsgemäßen Sägeblatts;
- Figur 3: eine Draufsicht auf das Sägeblatt aus Figur 1;
- Figur 4: eine Draufsicht auf eine weitere Ausführungsform eines erfindungsgemäßen Sägeblatts;
- Figur 5: eine Draufsicht auf eine weitere Ausführungsform eines erfindungsgemäßen Sägeblatts;
- Figur 6: eine Draufsicht auf eine weitere Ausführungsform eines erfindungsgemäßen Sägeblatts;
- Figur 7: eine perspektivische Ansicht eines Sägeblatts mit Führungseinrichtung;
- Figur 8: eine Draufsicht auf eine weitere Ausführungsform eines erfindungsgemäßen Sägeblatts;
- Figur 9: eine Draufsicht auf eine weitere Ausführungsform eines erfindungsgemäßen Sägeblatts;
- Figur 10: eine perspektivische Ansicht des Sägeblatts aus Figur 9, mit einer Führungseinrichtung.

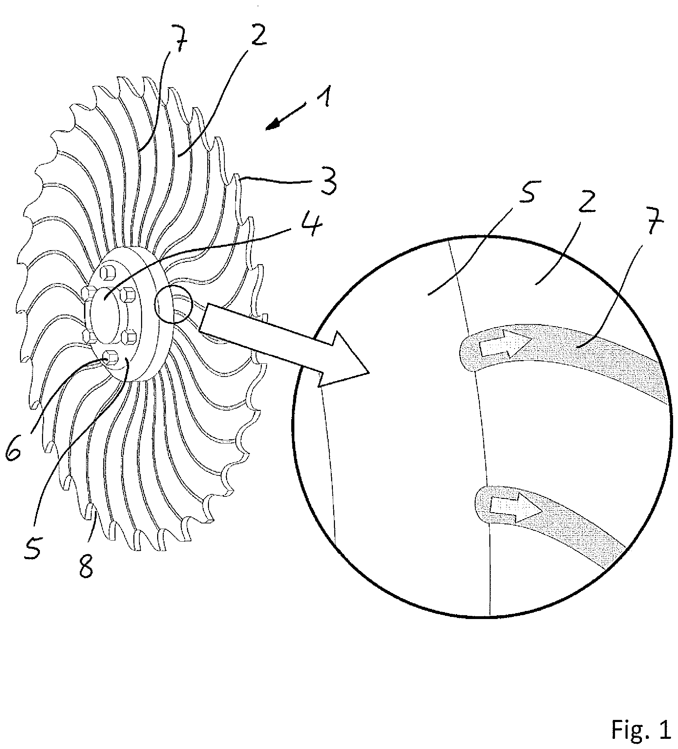

Die Figuren 1 bis 10 zeigen unterschiedliche Ausführungsbeispiele für ein erfindungsgemäß ausgestaltetes Sägeblatt, wobei gleiche oder sich entsprechende Elemente mit jeweils identischen Bezugszeichen versehen sind. Daher sind nicht zu allen Ausführungsbeispielen alle Details wiederholt beschrieben.

Figur 1 zeigt in einer perspektivischen Ansicht - mit einer Detailvergrößerung - ein Sägeblatt 1, bestehend aus einem hier einteilig ausgebildeten Stammblatt 2, das an seinem Außenumfang in eine Vielzahl von umfangsverteilten Sägezähnen 3 ausläuft. Im Zentrum des Stammblatts 2 befindet sich eine (hier nicht sichtbare) Öffnung, durch die eine Antriebswelle 4 gesteckt ist. Die rotationsfeste Verbindung zwischen der Antriebswelle 4 und dem Stammblatt 2 wird von einem Flansch 5 bewerkstelligt, der mit einer Anzahl von Schrauben 6 am Stammblatt 2 befestigt ist.

Zwischen dem Flansch 5 und dem Stammblatt 2 befindet sich ein Flüssigkeitsraum für eine Kühl-Schmier-Emulsion, die mittels einer (nicht dargestellten) Flüssigkeitsdurchführung in der Antriebswelle 4 zugeführt wird.

Die hier sichtbare Seitenfläche des Stammblatts 2 ist mit einer Vielzahl von eingravierten Kanälen 7 versehen, die, wie die Detailvergrößerung in Figur 1 zeigt, einerseits bis unter den Flansch 5 und dort in den Flüssigkeitsraum reichen und andererseits in den Spanräumen 8 zwischen den Sägezähnen 3 am Außenumfang des Stammblatts 2 auslaufen.

Aufgrund der Rotationsbewegung des Sägeblatts 1 wirkt auf die Flüssigkeit im Flüssigkeitsraum unter dem Flansch 5 eine Zentrifugalkraft, so dass die Flüssigkeit, wie in der Detailvergrößerung der Figur 1 gezeigt, in den Kanälen 7 zum Außenumfang des Sägeblatts 1 hin beschleunigt wird. Aufgrund von Adhäsionskräften und des bogenförmigen Verlaufs der Kanäle 7 verbleibt die Flüssigkeit im Wesentlichen in den Kanälen 7 und wird so zuverlässig bis in die Spanräume 8 zwischen den Sägezähnen 3 geleitet. Insbesondere dann, wenn die Sägezähne 3 durch einen Schnittkanal im zu sägenden Material laufen, werden die Kanäle 7 im Schnittkanal abgedeckt, was für den bogenförmigen Verlauf der Kanäle 7 zusätzlich berücksichtigt werden kann. Die Seitenfläche des Stammblatts 2 ist gemäß der Erfindung außerhalb der Kanäle 7 mit einer flüssigkeitsabweisenden Beschichtung versehen, so dass die Flüssigkeit noch besser in den Kanälen 7 geführt wird.

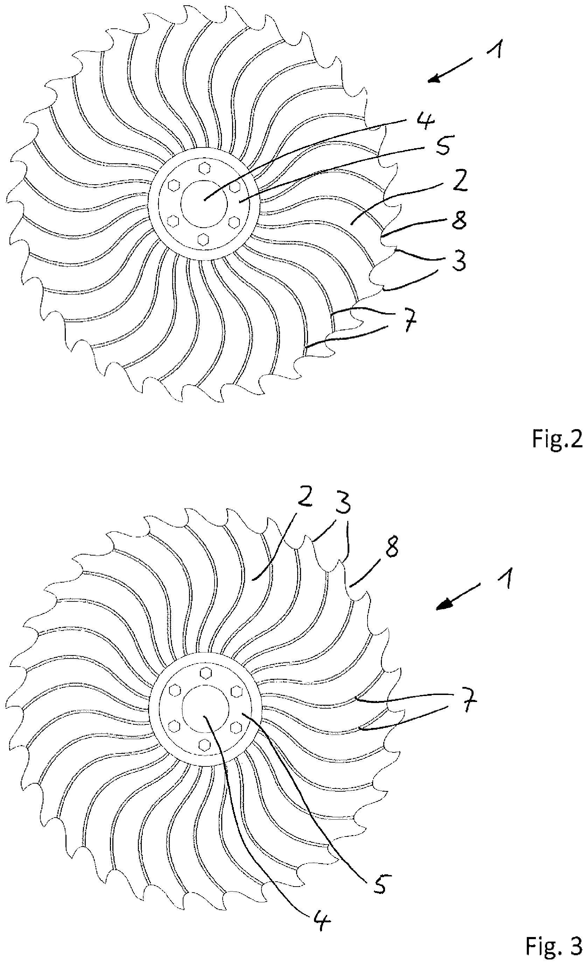

Figur 3 zeigt eine Draufsicht auf das Sägeblatt 1 aus Figur 1, während Figur 2 eine ebensolche Draufsicht auf ein ganz ähnlich ausgebildetes Sägeblatt 1 zeigt, wobei hier jedoch die Kanäle 7 einen gespiegelten bogenförmigen Verlauf aufweisen. Da sich das Sägeblatt 1 in der Darstellung der Figuren 2 und 3 entgegen des Urzeigersinns bewegt, wird bei dem bogenförmigen Verlauf der Kanäle 7 im Ausführungsbeispiel nach Figur 2 die in den Kanälen 7 geleitete Flüssigkeit in den zentrumsnahen Bereichen des Stammblatts 2 zunächst hauptsächlich in Rotationsrichtung beschleunigt, während die radiale Beschleunigung zunimmt, je mehr sich die Flüssigkeit in den Kanälen 7 dem Außenumfang des Sägeblatts 1 nähert.

Die Flüssigkeit tritt dann in den Spanräumen 8 mit hoher Geschwindigkeit aus den Kanälen 7 aus, so dass sie in der Lage ist, Späne aus den Spanräumen 8 auszuspülen.

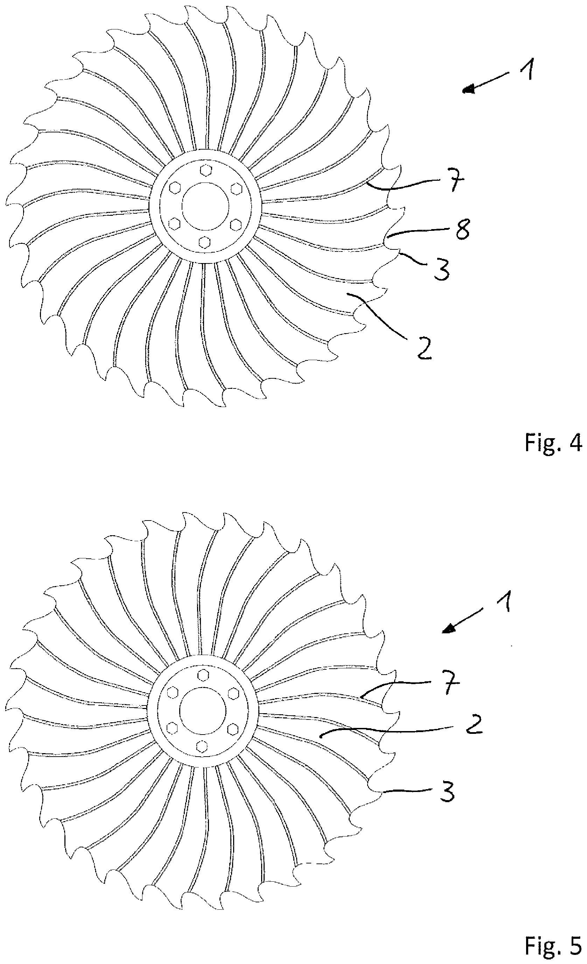

Die Figuren 4 und 5 zeigen wiederum Draufsichten auf zwei Ausführungsbeispielen für ein erfindungsgemäß ausgestaltetes Sägeblatt 1, bei denen die Verläufe der Kanäle 7 gespiegelt sind. Bis auf die Kanäle 7 sind diese Sägeblätter 1 identisch ausgebildet wie bei den vorhergehenden Ausführungsbeispielen.

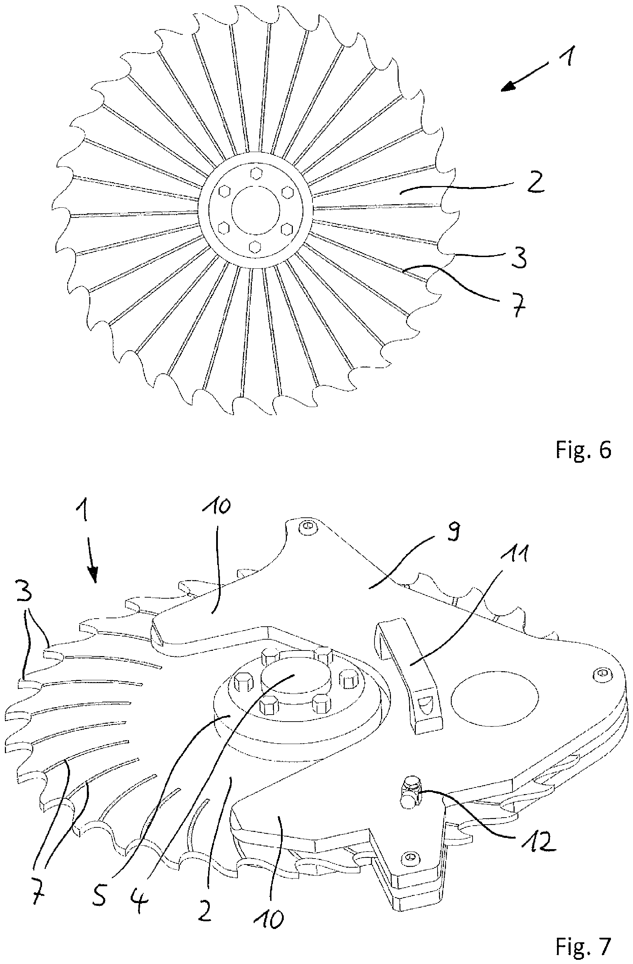

Figur 6 zeigt eine Draufsicht auf ein Sägeblatt 1, dessen Kanäle 7 geradlinig radial verlaufen. Auch hier sind wiederum die übrigen Merkmale identisch zu den Merkmalen der vorhergehenden Ausführungsbeispiele.

Figur 7 ist eine perspektivische Ansicht eines Sägeblatts 1, das wiederum aus einem Stammblatt 2 mit einteilig angeformten Sägezähnen 3 besteht, auf einer Antriebswelle 4 sitzt und mittels eines Flansches 5 an dieser befestigt ist. Zusätzlich weist es eine Führungseinrichtung 9 auf, die insbesondere zwei Halterungen 10 besitzt, in denen (hier nicht sichtbare) Gleitstücke aus Hartmetall sitzen, mittels denen das Stammblatt 2 geführt wird. Die Führungseinrichtung 9 weist einen Griff 11 auf, mit dem sie aufgeklappt werden kann, um das Sägeblatt 1 sowie gegebenenfalls auch die Gleitstücke in den Halterungen 10 austauschen zu können.

Die Besonderheit dieses Ausführungsbeispiels besteht darin, dass die Kanäle 7 in der Seitenfläche des Stammblatts 2 sich nicht bis zum Flansch 5 erstrecken, sondern nur von einem Bereich, der von den Gleitstücken der Führungseinrichtung 9 überstrichen wird, ausgehend bis jeweils zu den Spanräumen 8 zwischen den Sägezähnen 3 verlaufen. Denn die Flüssigkeit, die durch die Kanäle 7 geführt werden soll, also in der Regel eine Kühl-Schmier-Emulsion, wird hier über einen Flüssigkeitsanschluss 12 der Führungseinrichtung 9 in diese eingeleitet und dort in die Kanäle 7 weitergeleitet.

Dieses Ausführungsbeispiel hat den Vorteil, dass die Kanäle 7 nur relativ kurz ausgebildet sein müssen (wobei es auch bei diesem Ausführungsbeispiel jedoch nicht ausgeschlossen ist, die Kanäle bis unter den Flansch 5 reichen zu lassen) und der Weg der Flüssigkeit innerhalb der Kanäle 7 relativ kurz ist. Auch die Zuführung der Flüssigkeit über den Flüssigkeitsanschluss 12 der Führungseinrichtung 9 ist unkompliziert. Auf der anderen Seite sind die Halterungen 10 der Führungseinrichtung 9 prinzipbedingt möglichst nahe am Außenumfang des Stammblatts 2 angeordnet, so dass der Schnittbereich des Sägeblatts 1 in einem Winkelbereich liegt, der zwischen den beiden Halterungen 10 und ihren Gleitstücken liegt. Dies bedingt, dass die Kanäle 7 solcherart geformt sein müssen, das die Flüssigkeit im Wesentlichen erst dann zwischen den Sägezähnen 3 austritt, wenn diese in das zu sägende Material eintreten.

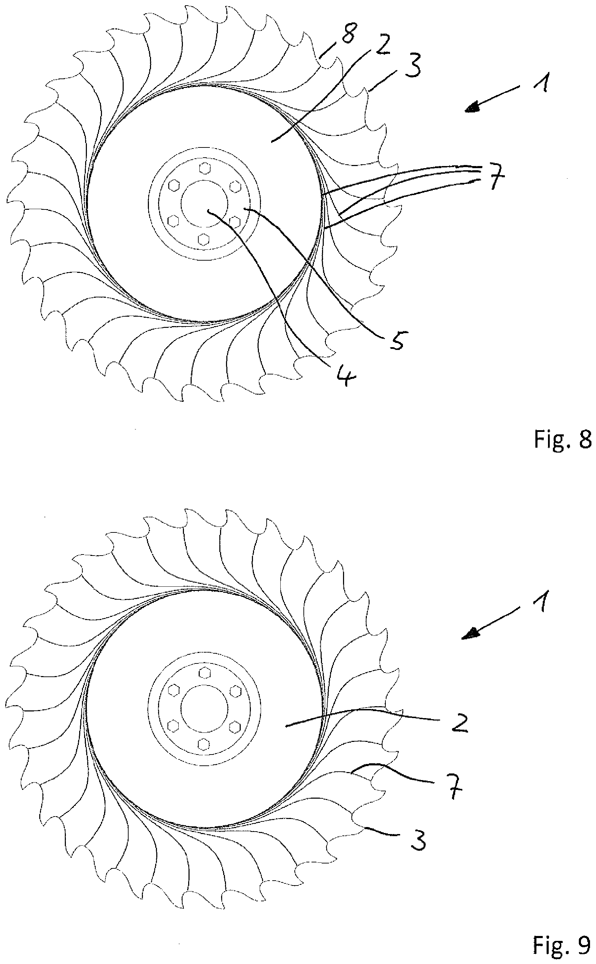

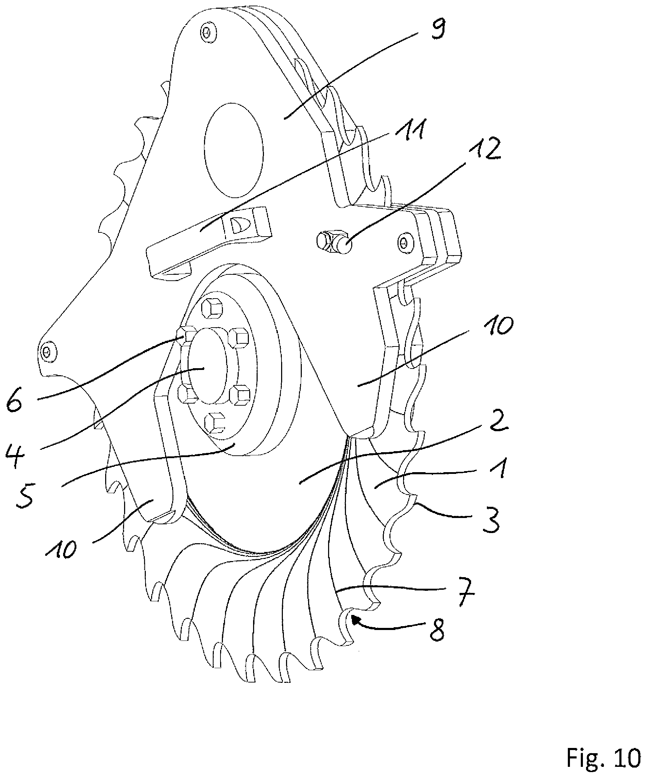

In den Figuren 8 und 9 ist eine Draufsicht auf zwei Ausführungsbeispiele eines erfindungsgemäßen Sägeblatts 1 dargestellt, deren Kanäle wiederum gespiegelt sind und nicht bis in die zentralen Bereiche des Stammblatts 2 reichen. Die Kanäle 7 dieser Ausführungsbeispiele sind vielmehr dazu vorgesehen, mit einer Führungseinrichtung 9 zusammenzuwirken, wie dies in Figur 10 dargestellt ist. Der bogenförmige Verlauf der Kanäle 7 ist hier solcherart optimiert, dass die Flüssigkeit 7, die in der Führungseinrichtung 9 zugeführt wird (mittels des Flüssigkeitsanschlusses 12) zunächst in Rotationsrichtung beschleunigt und dann bei zunehmender Geschwindigkeit und entsprechend zunehmender Zentrifugalkraft in einem mehr radial verlaufenden Bereich der Kanäle 7 gelangt, wo sie dann im Wesentlichen nur noch radial beschleunigt wird, um mit möglichst hoher Geschwindigkeit in die Spanräume 8 des Sägeblatts 1 zu gelangen.

## Patentansprüche

1. Sägeblatt für eine Kreissäge, mit einem ein- oder mehrteiligen kreisscheibenförmigen Stammblatt (2), an dessen Außenumfang eine Vielzahl von umfangsverteilten Sägezähnen (3) angeordnet ist und dessen Zentrum Mittel (5, 6) zum Befestigen des Sägeblatts (1) an einer Antriebswelle (4) aufweist, wobei mindestens eine Seitenfläche des Stammblatts (2) mit offenen Kanälen (7) zum Leiten von Flüssigkeiten versehen ist,
**dadurch gekennzeichnet,**
**dass** die Oberfläche der mit Kanälen (7) versehenen Seitenfläche des Stammblatts (2) mit einer flüssigkeitsabweisenden Beschichtung versehen ist.

2. Sägeblatt nach Anspruch 1,
wobei die Kanäle (7) durch Gravieren, insbesondere mittels Lasergravur in die Seitenfläche des Stammblatts (2) eingebracht sind.

3. Sägeblatt nach einem der Ansprüche 1 oder 2,
wobei die Kanäle (7) von einem zentralen Bereich und/oder einem von einer Führungseinrichtung (9) überstrichenen Bereich des Stammblatts (2) ausgehend bis im Wesentlichen zum Außenumfang des Stammblatts (2) hin verlaufen.

4. Sägeblatt nach Anspruch 3,
wobei die Kanäle (7) am Außenumfang des Stammblatts (2) jeweils zwischen den Sägezähnen (3) enden.

5. Sägeblatt nach mindestens einem der Ansprüche 1 bis 4,
wobei die Kanäle (7) einen bogenförmigen Verlauf aufweisen, um eine darin geleitete Flüssigkeit durch eine Rotation des Sägeblatts (1) und eine dadurch hervorgerufene Zentrifugalkraft zum Außenumfang des Stammblatts (2) hin zu beschleunigen.

6. Sägeblatt nach mindestens einem der Ansprüche 1 bis 5,
wobei die Mittel zum Befestigen des Sägeblatts (1) an einer Antriebswelle (4) mindestens einen auf das Stammblatt (2) aufgesetzten Flansch (5) umfassen, und wobei zumindest ein Teil der Kanäle (7) bereichsweise unter dem Flansch (5) verlaufen.

7. Sägeblatt nach Anspruch 6, wobei der Flansch (5) zwischen sich und der Seitenfläche des Stammblatts (2) einen Flüssigkeitsraum bildet, und wobei zumindest ein Teil der Kanäle (7) bis in den Flüssigkeitsraum hinein reicht.

8. Sägeblatt nach Anspruch 7, wobei der Flansch (5) mit einer Flüssigkeitszuführung versehen ist, die mit dem Flüssigkeitsraum in Verbindung steht.

9. Vorrichtung, bestehend aus einem Sägeblatt (1) nach mindestens einem der Ansprüche 1 bis 8, und einer Führungseinrichtung (9), die mindestens eine Halterung (10) und Gleitstücke für einen zumindest zeitweisen gleitenden Kontakt mit dem Stammblatt (2) umfasst, wobei zumindest ein Teil der Kanäle (7) teilweise in einem von der Führungseinrichtung (9) überstrichenen Bereich verläuft, und wobei die Halterung (10) der Führungseinrichtung (9) mit einem Flüssigkeitsanschluss (12) versehen ist.

10. Verfahren zum Herstellen eines Sägeblatts (1) nach mindestens einem der Ansprüche 1 bis 9,
**dadurch gekennzeichnet,**
**dass** mindestens eine Seitenfläche des Stammblatts (2) mit einer flüssigkeitsabweisenden Beschichtung versehen und dann die offenen Kanäle (7) zum Leiten von Flüssigkeiten eingraviert werden, insbesondere mittels Laserstrahlung.

11. Kreissägemaschine mit einem Sägeblatt (1) nach mindestens einem der Ansprüche 1 bis 9, mit einer feststehenden oder beweglichen Auflage für mindestens ein zu sägendes Werkstück, mit einer feststehenden oder beweglichen Haltevorrichtung für das Sägeblatt (1) und mit einer Antriebsvorrichtung mit einer Antriebswelle (4), an der das Sägeblatt (1) lösbar befestigt ist.

12. Kreissägemaschine nach Anspruch 11,
wobei die Antriebswelle (4) mit einer Flüssigkeitsdurchführung versehen ist, die von einem Anschluss bis zu demjenigen Bereich verläuft, in dem das Sägeblatt (1) auf der Antriebswelle (4) zu befestigen ist.

13. Kreissägemaschine nach einem der Ansprüche 11 oder 12, mit einem Sägeblatt (1) nach Anspruch 7,
wobei die Antriebswelle (4) mit einer Flüssigkeitsdurchführung versehen ist, die von einem Anschluss bis zu dem zwischen dem Flansch (5) und einer Seitenfläche des Stammblatts (2) gebildeten Flüssigkeitsraum verläuft.

14. Kreissägemaschine nach mindestens einem der Ansprüche 11 bis 13, mit einer Führungseinrichtung (9) für das Sägeblatt (1), die mindestens eine Halterung (10) und Gleitstücke für einen zumindest zeitweisen gleitenden Kontakt mit dem Stammblatt (2) umfasst, wobei die Führungseinrichtung (9) mit einem Flüssigkeitsanschluss (12) versehen ist, und wobei zumindest ein Teil der Kanäle (7) auf mindestens einer Seitenfläche des Stammblatts (2) des Sägeblatts (1) teilweise in einem von der Führungseinrichtung (9) überstrichenen Bereich verläuft.

## Claims

1. Saw blade for a circular saw, having a one-part or multi-part circular-disc-shaped blade body (2) on the outer perimeter of which there is arranged a multiplicity of saw teeth (3) distributed around the perimeter and the centre of which has means (5, 6) for fastening the saw blade (1) to a drive shaft (4), at least one side face of the blade body (2) being provided with open channels (7) for conducting fluids,
**characterised in that**
the surface of the side face of the blade body (2) that is provided with channels (7) is provided with a fluid-repellent coating.

2. Saw blade according to claim 1,
wherein the channels (7) are introduced into the side face of the blade body (2) by engraving, especially by means of laser engraving.

3. Saw blade according to either one of claims 1 and 2,
wherein the channels (7), starting from a central region and/or from a region of the blade body (2) passed over by a guide device (9), run substantially as far as the outer perimeter of the blade body (2).

4. Saw blade according to claim 3,
wherein the channels (7) each end between the saw teeth (3) on the outer perimeter of the blade body (2).

5. Saw blade according to at least one of claims 1 to 4,
wherein the channels (7) follow an arcuate path in order to accelerate a fluid conducted therein towards the outer perimeter of the blade body (2) by rotation of the saw blade (1) and a centrifugal force thereby produced.

6. Saw blade according to at least one of claims 1 to 5,
wherein the means for fastening the saw blade (1) to a drive shaft (4) comprise at least one flange (5) mounted on the blade body (2), and wherein at least a portion of the channels (7) runs in some regions under the flange (5).

7. Saw blade according to claim 6,
wherein the flange (5) forms a fluid space between itself and the side face of the blade body (2), and wherein at least a portion of the channels (7) extend into the fluid space.

8. Saw blade according to claim 7,
wherein the flange (5) is provided with a fluid supply which is connected to the fluid space.

9. Apparatus, consisting of a saw blade (1) according to at least one of claims 1 to 8, and a guide device (9) which comprises at least one holder (10) and slide blocks for at least intermittent sliding contact with the blade body (2), wherein at least a portion of the channels (7) runs partly in a region passed over by the guide device (9), and wherein the holder (10) of the guide device (9) is provided with a fluid connection (12).

10. Method of producing a saw blade (1) according to at least one of claims 1 to 9,
**characterised in that**
the least one side face of the blade body (2) is provided with a fluid-repellent coating and then the open channels (7) for conducting fluids are engraved, especially by means of laser radiation.

11. Circular saw machine having a saw blade (1) according to at least one of claims 1 to 9, having a fixed or movable support for at least one workpiece to be sawn, having a fixed or movable holding device for the saw blade (1) and having a drive device with a drive shaft (4) to which the saw blade (1) is detachably fastened.

12. Circular saw machine according to claim 11,
wherein the drive shaft (4) is provided with a fluid conduit which runs from a connection to the region in which the saw blade (1) is to be fastened on the drive shaft (4).

13. Circular saw machine according to either one of claims 11 and 12, having a saw blade (1) according to claim 7,
wherein the drive shaft (4) is provided with a fluid conduit which runs from a connection to the fluid space formed between the flange (5) and a side face of the blade body (2).

14. Circular saw machine according to at least one of claims 11 to 13, having a guide device (9) for the saw blade (1), which guide device comprises at least one holder (10) and slide blocks for at least intermittent sliding contact with the blade body (2), wherein the guide device (9) is provided with a fluid connection (12), and wherein at least a portion of the channels (7) on at least one side face of the blade body (2) of the saw blade (1) runs partly in a region passed over by the guide device (9).

## Revendications

1. Lame de scie destinée à une scie circulaire, munie d'un corps principal (2) de forme discoïdale circulaire en une ou plusieurs partie(s), sur le pourtour extérieur duquel se trouve une multiplicité de dents de sciage (3) réparties sur la circonférence, et dont le centre comporte des moyens (5, 6) dévolus à la fixation de ladite lame de scie (1) à un arbre d'entraînement (4), sachant qu'au moins une face latérale dudit corps principal (2) de la lame est pourvue de canaux ouverts (7) affectés à la canalisation de fluides,
**caractérisée par le fait**
**que** la surface de la face latérale du corps principal (2) de la lame, pourvue de canaux (7), est dotée d'un revêtement repoussant les fluides.

2. Lame de scie selon la revendication 1,
les canaux (7) étant pratiqués par gravage, notamment par gravage au laser, dans la face latérale du corps principal (2) de ladite lame.

3. Lame de scie selon l'une des revendications 1 ou 2,
dans laquelle les canaux (7) s'étendent à partir d'une région centrale, et/ou d'une région du corps principal (2) de ladite lame balayée par un dispositif de guidage (9), pour l'essentiel jusqu'au pourtour extérieur dudit corps principal (2) de la lame.

4. Lame de scie selon la revendication 3,
les canaux (7) s'achevant, à chaque fois, entre les dents de sciage (3) sur le pourtour extérieur du corps principal (2) de ladite lame.

5. Lame de scie selon au moins l'une des revendications 1 à 4,
les canaux (7) présentant un tracé en arc de cercle en vue d'accélérer un fluide, canalisé dans ces derniers, vers le pourtour extérieur du corps principal (2) de la lame sous l'effet d'une rotation de ladite lame de scie (1), et d'une force centrifuge ainsi engendrée.

6. Lame de scie selon au moins l'une des revendications 1 à 5,
dans laquelle les moyens, dévolus à la fixation de ladite lame de scie (1) à un arbre d'entraînement (4), incluent au moins un flasque (5) mis en place sur le corps principal (2) de ladite lame, au moins une partie des canaux (7) s'étendant, par zones, au-dessous dudit flasque (5).

7. Lame de scie selon la revendication 6,
dans laquelle le flasque (5) forme un compartiment à fluides, entre lui-même et la face latérale du corps principal (2) de ladite lame, au moins une partie des canaux (7) pénétrant jusque dans ledit compartiment à fluides.

8. Lame de scie selon la revendication 7,
dans laquelle le flasque (5) est doté d'une arrivée de fluides en communication avec le compartiment à fluides.

9. Agencement composé d'une lame de scie (1) conforme à au moins l'une des revendications 1 à 8, et d'un dispositif de guidage (9) qui inclut au moins un support (10) et des pièces de glissement affectées à un contact glissant avec le corps principal (2) de ladite lame, au moins par intermittence, sachant qu'au moins une partie des canaux (7) s'étend, partiellement, dans une région balayée par le dispositif de guidage (9), et sachant que le support (10) dudit dispositif de guidage (9) est muni d'un raccord (12) à fluides.

10. Procédé de fabrication d'une lame de scie (1) conforme à au moins l'une des revendications 1 à 9,
**caractérisé par le fait**
**qu'**au moins une face latérale du corps principal (2) de la lame est munie d'un revêtement repoussant les fluides, les canaux ouverts (7) affectés à la canalisation de fluides étant pratiqués par gravage, en particulier au moyen d'un rayonnement laser.

11. Machine de sciage circulaire comprenant une lame de scie (1) conforme à au moins l'une des revendications 1 à 9 ; un appui fixe ou mobile, dédié à au moins une pièce à scier ; un dispositif de retenue fixe ou mobile, affecté à la lame de scie (1) ; et un dispositif d'entraînement doté d'un arbre d'entraînement (4) auquel ladite lame de scie (1) est fixée de manière libérable.

12. Machine de sciage circulaire selon la revendication 11,
dans laquelle l'arbre d'entraînement (4) est muni d'une traversée parcourue par des fluides, qui part d'un raccord et gagne la région dans laquelle la lame de scie (1) doit être fixée sur ledit arbre d'entraînement (4).

13. Machine de sciage circulaire selon l'une des revendications 11 ou 12, équipée d'une lame de scie (1) conforme à la revendication 7,
dans laquelle l'arbre d'entraînement (4) est muni d'une traversée parcourue par des fluides, qui part d'un raccord et gagne le compartiment à fluides formé entre le flasque (5) et une face latérale du corps principal (2) de la lame.

14. Machine de sciage circulaire selon au moins l'une des revendications 11 à 13,
équipée d'un dispositif de guidage (9) qui est dédié à la lame de scie (1) et inclut au moins un support (10) et des pièces de glissement affectées à un contact glissant avec le corps principal (2) de ladite lame, au moins par intermittence, sachant que ledit dispositif de guidage (9) est pourvu d'un raccord (12) à fluides, et sachant qu'au moins une partie des canaux (7) s'étend partiellement, sur au moins une face latérale dudit corps principal (2) de la lame de scie (1), dans une région balayée par ledit dispositif de guidage (9).
